Europäisches Patentamt

European Patent Office

Office européen des brevets

(19)

(11) Veröffentlichungsnummer: **0 168 621**
**B1**

(12) **EUROPÄISCHE PATENTSCHRIFT**

(45) Veröffentlichungstag der Patentschrift: **19.09.90**

(21) Anmeldenummer: **85107028.4**

(22) Anmeldetag: **07.06.85**

(51) Int. Cl.[5]: **B 29 C 43/00**, B 29 C 43/56,
B 29 C 47/00, H 01 B 1/12 //
(B29K55/00, 86:00,
B29L31:34)

(54) **Verfahren zur Herstellung von Formteilen aus elektrisch leitfähigen organischen Polymeren und/oder organischen Leitern, Vorrichtung zur Durchführung des Verfahrens sowie Verwendung der Formteile.**

(30) Priorität: **14.06.84 DE 3421993**

(43) Veröffentlichungstag der Anmeldung:
**22.01.86 Patentblatt 86/04**

(45) Bekanntmachung des Hinweises auf die
Patenterteilung:
**19.09.90 Patentblatt 90/38**

(84) Benannte Vertragsstaaten:
**AT BE CH DE FR GB IT LI NL SE**

(56) Entgegenhaltungen:
**EP-A-0 026 235**
**EP-A-0 101 894**
**US-A-3 230 905**

**POLYMER SCIENCE USSR, Band 24, Nr. 11,
1983, Seiten 2641-2645, Pergamon Press, Ltd,
Oxford, GB; V.A. ZHORIN et al.: "Effect of high
pressure on certain electrophysical properties of
iodine-doped polymers with a conjugation
system"**

(73) Patentinhaber: **Zipperling Kessler & Co (GmbH &
Co)**
**Kornkamp 50**
**D-2070 Ahrensburg (DE)**

(72) Erfinder: **Wessling, Bernhard, Dr.**
**Bachstrasse 112**
**D-2072 Bargteheide (DE)**
Erfinder: **Volk, Harald, Dr.**
**Jenbekerstrasse 51a**
**D-2072 Bargteheide (DE)**

(74) Vertreter: **UEXKÜLL & STOLBERG**
**Patentanwälte**
**Beselerstrasse 4**
**D-2000 Hamburg 52 (DE)**

(56) Entgegenhaltungen:
**JAPANESE JOURNAL OF APPLIED PHYSICS
SUPPLEMENTS, Band 21, März 1982, Seiten
199-201, Tokyo, JP; J. TSUJINO et al.: "Studies
on the ultrasonic vibration press of powder - on
te vibration press with a vibration die"
Makromol. Chem. 185 (1984), 83/256, S. 1-11, B.
Wessling "Beitrag zur Diskussion um die
Morphologie von Polyacetylen"**

**Beschreibung**

Die Synthese sowie die chemischen, elektrischen und photoelektrischen Eigenschaften von nicht-polymeren und von polymeren organischen Halbleitern und Leitern sind intensiv untersucht worden. Der Stand des derzeitigen Wissens, aber auch die z.T. unterschiedlichen Auffassungen sind mehrfach referiert worden, vergl. G. Wegner, Angew. Chem. *93,* 352 bis 371 (1981); M. Hanack, Naturwiss. *69,* 266 bis 275 (1982); A. Heeger et al., Synthetic Metals, Band 6, 243 bis 263 (1983); K. Seeger, Angew. Makromol. Chem. *109/110,* 227 bis 251 (1982).

Unter "leitfähigen Polymeren" werden polykonjugierte Systeme verstanden, wie sie in Polyacetylen (PAc), poly-1,3,5, ... n-substituierten Polyacetylenen, Acetylencopolymeren, sowie 1,3-tetramethylen-überbrückten Polyenen, z.B. aus der Polymerisation von 1,6-Heptadiin resultierenden Polymeren und ähnlichen Derivaten von Polyacetylen vorliegen; ferner gehören hierzu die unterschiedlichen Modifikationen von Polyparaphenylenen (PPP), die unterschiedlichen Modifikationen von Polypyrrolen (PPy), die unterschiedlichen Modifikationen von Polyphthalocyaninen (PPhc) und andere polymere organische Leiter wie z.B. Polyaniline, Polyperinaphthaline usw. Diese können als solche oder als mit oxidierenden oder reduzierenden Stoffen komplexierte ("dotierte") Polymere vorliegen; die Komplexierung führt in der Regel zu einer Erhöhung der elektrischen Leitfähigkeit um mehrere 10-er Potenzen bis in den metallischen Bereich hinein.

Unter "organischen Leitern" werden nicht-polymere organische Stoffe verstanden, insbesondere Komplexsalze bzw. Charge-Transfer-Komplexe, z.B. die unterschiedlichen Modifikationen von Tetracyanochinodimethan (TCNQ)-Salzen.

Di leitfähigen Polymeren fallen z.T. als polykristalline Pulver, folienähnliche Agglomerate oder Brocken von Primärteilchen an. Da z.B. Polyacetylen weder löslich noch schmelzbar ist, war es eine wesentlicher Fortschritt, als Shirakawa durch Grenzflächenpolymerisation freitragende, allerdings sehr dünne Folien erzeugen konnte, deren Eigenschaften dünnen Polymerfolien angenähert sind. Die an diesen Folien durchgeführten Untersuchungen über die Morphologie von Polyacetylen führten zu einer Fibrillentheorie, gemäß der sich Polyacetylen zu langgestreckten Fasern zusammenlagert, durch die sich kristalline Bereiche in Faserrichtung ausbilden, in denen nach der Dotierung (Komplexierung) entlang der Faserachse der Strom fließen soll.

Es herrscht allgemein die Meinung vor, daß die Leitfähigkeit durch die hohe Kristallinität und durch die Anordnung der polykonjugierten Systeme (ggf. in komplexierter Form) hervorgerufen wird. Es ist jedoch noch nicht ausreichend geklärt, ob der Leitfähigkeitsmechanismus bei den Polyenen und Polyphenylenen sowie Polypyrrolen von Elektronentransporten entlang der Kette oder quer zur Kettenrichtung bestimmt wird, umso mehr als auch die Morphologie der leitfähigen Polymeren bislang noch nicht aufeklärt war. Hierzu konnte jetzt vom Erfinder bewiesen werden, daß die Primärteilchen von Polyacetylen stets feinste kugelförmige Partikelchen sind, die z.T. zu fibrillenartigen Sekundärteilchen, z.T. aber auch zu ungerichteten folienähnlichen Filmen agglomerieren, vergl. B. Weßling, Makromol. Chem. *185* (1984), 1265 bis 1275. Der Inhalt dieser Arbeit wird zum Bestandteil der Offenbarung in vorliegender Anmeldung gemacht.

Aus der Literatur lassen sich hinsichtlich der physikalischen Eigenschaften und der Verarbeitbarkeit folgende gemainsame Merkmale von leitfähigen Polymeren und organischen Leitern herausstellen:

Hohe Kristallinität, z.B. polykristalline Pulver, in Einzelfällen lange nadelförmige Kristalle (für TCNQ vergl. Hanack 1982), oder andere makroskopische Kristallformen, z.B. bei Polyphthalocyaninen. Bei Polyacetylen überschreitet die Größe der Kristallite offenbar 10 nm (100 Å) nicht (D. White, et al., Polymer *24,* 805 (1983)).

Polykonjugierte Polymer sind im Grundzustand Isolatoren, im Gegensatz zu polymerüberbrückten Charge-Transfer-Komplexen wie Polyphthalocyaninen (vergl. Hanack, a.a.0., 269/279).

Optisches Aussehen in der Regel matt-schwarz (glänzend nur dann, wenn die Synthese an glatten Oberflächen ausgeführt wurde, vergl. die Shirakawa-Methode zur Herstellung freitragender "Folien", bei der die dem Glas zugewandte Seite glänzend, die dem Glas abgewandte Seite matt ist). Polyphthalocyanine sind nicht glänzende, blau erscheinende Pulver.

Sofern aufgrund der Synthesebedingungen makroskopisch größere Gebilde gewonnen werden können, sind diese spröde (Ausnahme: cis-Polyacetylen). Charge-Transfer-Komplexe sind wegen ihres kristallinen Aufbaus immer sehr spröde Substanzen, die sich mechanisch sehr schlecht verarbeiten lassen (Hanack, a.a.0., 269/270). Ähnliches gilt für alle unkomplexierten und erst recht für die komplexierten leitfähigen Polymeren.

Die leitfähigen Polymeren und organischen Leiter sind in aller Regel unlöslich, unschmelzbar und nicht formbar sowie meistens gegenüber Sauerstoff, Feuchtigkeit und höheren Temperaturen instabil. Sofern sich z.B. bei nicht-polymeren oder polymeren Charge-Transfer-Komplexen (TCNQ, bzw. PPhc) Schmelzpunkte überhaupt beobachten lassen, liegen diese nahe dem Zersetzungspunkt, so daß ein zersetzungsfreies Schmelzen nicht oder nur unter äußersten Schwierigkeiten möglich ist. Sofern bei den verschiedenen leitfähigen Polymeren lösliche Derivate existieren, ist deren Leitfähigkeit um mehrere 10-er Potenzen schlechter als bei den unlöslichen Ausgangsstoffen. Eine thermoplastische Verformung von leitfähigen Polymeren und organischen Leitern ist bisher nicht gelungen. Polypyrrol und einige Vertreter der Polyphthalocyanine sind gegenüber oxidativen und thermischen Einflüssen vergleichsweise stabil, vergl. Hanack a.a.0.; K. Kanazawa et al., J. Chem. Soc., Chem. Comm. 1979, 854/855.

## EP 0 168 621 B1

Die 1982 von Hanack getroffene Aussage, daß die meisten organischen Leiter und leitfähigen Polymeren primär unter dem Gesichtspunkt hoher Leitfähigkeit hergestellt wurden, daß aber ihre mechanischen Eigenschaften, ihre Stabilität und ihre Verarbeitbarkeit vernachlässigt wurden, gilt unverändert. Zu den für die Verarbeitbarkeit wichtigen physikalischen Eigenschaften der organischen Leiter und leitfähigen Polymeren läßt sich folgendes feststellen:

### 1. Unlöslichkeit

Während die nicht-polymeren organischen Leiter aus Lösungen der beiden beteiligten Komponenten kristallisiert werden und nach ihrer Herstellung z.T. weiterhin zersetzungsfrei löslich sind, konnte bisher für leitfähige Polymere weder in nativer noch in komplexierter Form ein Lösungsmittel gefunden werden. Die von T. Matsumoto et al., J. Polym. Sci. (A-2) *10*, 23 (1972) beschriebenen Versuche mit Polyacetylen aus mittels γ-Strahlung induzierter Polymerisation betrafen offenbar überhaupt kein Polyacetylen in der hier zur Diskussion stehenden chemischen Einheitlichkeit, wie die IR-Spektren zeigen, sondern uneinheitliche Gemische verschiedenartig substituierter niedermolekularer Polyene. Die Auflösung von Polyacetylen in heißer Schwefelsäure (S. Miyata et al., Polym. J. *15*, 557 bis 558 (1983)) führt zu oxidativ stark angegriffenen chemisch veränderten Produkten (A. Pron, Polymer *24*, 1294ff. (1983)).

Auch für die anderen leitfähigen Polymeren wurden bisher keine Lösungsmittel beschrieben. Für Polyphthalocyanine ist versucht worden, durch Einführung von Ringsubstituenten, z.B. tert.-Butylgruppen, die Löslichkeit zu erhöhen; dabei nimmt jedoch die Leitfähigkeit um mehrere 10-er Potenzen ab. T. Inabe et al., J. Chem. Soc., Chem. Comm. 1983, 1984—85 beschreiben die Lösung von Polyphthalocyanin in Trifluoromethansulfonsäure, ohne jedoch Auskünfte über die Eigenschaften des daraus zurückgewinnenden Rohstoffs zu geben.

Es sind ferner auch keine Lösungsmittel oder Verfahren bekannt, mit denen sich echte, absetzungsstabile Dispersionen herstellen lassen. In der EP—OS 62 211 werden zwar Polyacetylen-Suspensionen beschrieben, doch handelt es sich dabei um aufgeschlämmte grobe Polyacetylen-Teilchen ohne Desagglomeration der Tertiär- oder Sekundärstruktur der Teilchen.

### 2. Schmelzverhalten

Alle leifähigen Polymeren sind sowohl in nativer als auch in komplexierter Form nicht schelzbar. Die Differential-Thermoanalyse von Polyphthalocyaninen liefert zwar Hinweise auf ein Schmelzverhalten, doch ist dieses von sofortiger Zersetzung begleitet. Dynamoviskoelastische Untersuchungen an Polyacetylen (Shox-an Chen et al., Makromol. Chem. Rapid Comm. *4*, 503—506 (1983) zeigen, daß zwischen −100° und +350°C weder ein Glasübergangspunkt noch ein kristallines Schmelzen zu beobachten sind. Ab etwa 350°C beginnt die Zersetzung von Polyacetylen. Die einzige Phasenumwandlung in diesem Bereich findet oberhalb 150°C statt und wird der cis/trans-Isomerisierung zugeschrieben.

Zwar sind gelegentlich schmelzbare leitfähige Polymere beschrieben worden, deren Leitfähigkeit jedoch in keiner Weise befriedigt und um mehrere 10-er Potenzen tiefer liegt als bei den hier diskutierten Polymeren.

### 3. Stabilität

Es gibt zahlreiche Berichte, die sich mit der Instabilität leitfähiger Polymerer befassen. Polyacetylen ist besonders sauerstoffempfindlich und es wurde berichtet, daß selbst bei Lagerung unter inerter Atmosphäre und in der Kälte die ursprünglichen Eigenschaften von Polyacetylen verloren gehen. Beispielsweise ist es nach einiger Zeit nicht mehr verstreckbar. Komplexierte Polyacetylene verlieren selbst bei Lagerung unter inerter Atmosphäre nach kurzer Zeit ihre hervorragenden elektrischen Eigenschaften fast vollständig. Diese Erscheinungen werden auf einen oxidativen Abbau und auf Vernetzungsprozesse zurückgeführt, welche auch bei der cis/trans-Isomerisierung stattfinden sollen (vergl. u.a. M. Rubner et al., J. Polym. Sci., Polym. Symp. *70*, 45—69 (1983). Die Instabilität von Polymeren aus 1,6-Heptadiin wird von H. Gibson, J. Am. Chem. Soc. *105*, 4417 bis 4431 (1983) beschrieben. Dieses lagert sich beim Erhitzen unter Vakuum in nicht definierte, nicht mehr konjugierte Polymere um. Vergleichbare Vorgänge finden bei Polyacetylen statt.

### 4. Verformbarkeit

Es ist bisher nicht gelungen, Formteile aus leitfähigen Polymeren oder organischen Leitern durch Urformverfahren (Kunststoff-Taschenbuch, Seiten 58ff) zu erzeugen. Dies hängt unmittelbar damit zusammen, daß die Polymeren unschmelzbar und unlöslich sind. Ferner gelang es bisher nicht, echte Dispersionen dieser Stoffe in organischen Lösungsmitteln oder in viskosen Polymeren zu erzeugen.

Eine Ausnahme scheint in gewisser Hinsicht das cis-Polycetylen zu bilden, das in beschränktem Umfang unmittelbar nach der Herstellung "duktil" ist, wie M. Druy et al., J. Polym. Sci., Polym. Phys. Ed. *18*, 429 bis 441 (1980) berichten. Danach ist die Duktilität und Verstreckbarkeit ausschließlich auf das cis- Isomere beschränkt, während das trans-Isomere selbst in Abwesenheit von Sauerstoff spröde ist. A. MacDiarmid u. A. Heeger, Proceedings of a Nato ASI on Molecular Metals, Les Arcs, 1979, Plenumvortrag, erwähnen, daß frische "Folien" sowohl von cis- wie auch von trans-Polyacetylen flexibel und leicht verstreckbar sind, wobei letzteres der partiellen Orientierung der Fasern zugeschrieben wird. Auch das cis- Isomere verliert kurz nach der Synthese die Duktilitätseigenschaften selbst in Abwesenheit von Sauerstoff,

3

der auf die Versprödung außerodentlich beschleunigend wirkt. Dies hängt u.a. damit zusammen, daß Sauerstoff nicht nur einen oxidativen Abbau herbeiführt, sondern auch die cis/ trans-Isomerisierung bewirkt (J. Chien et al., J. Polym. Sci., Polym. Phys. Ed. *21,* 767 bis 770 (1983)). Nach Druy, a.a.0., tritt bei der Verstreckung unerwarteterweise eine Volumenzunahme ein, welche mit den schwachen interfibrillären Anziehungskräften erklärt wird. Darüber hinaus wird aus den Spannungs-Dehnungkurven und dem Zeitverhalten geschlossen, daß auch in Abwesenheit von Sauerstoff Vernetzungsprozesse stattfinden, möglicherweise durch das Auftreten freier Radikale bei der cis/ trans-Isomerisierung.

Angesichts dieser Schwierigkeiten hilft man sich zur Formgebung mit Methoden, die nicht den Urform-Verfahren zuzurechnen sind. So beschreiben Shirakawa et al. in der EP—OS 26235 die Verformung eines gelartigen Polyacetylens mit einem Lösungsmittelgehalt von 5 bis 95 Gew.%, welches bei Temperaturen zwischen Raumtemperatur und bis zu 100°C gepreßt wird, wobei Formteile entstehen, die anschließend getrocknet werden. In ähnlicher Weise gehen Kobayashi et al. (GB—OS 20 72 197) vor, welche frischpolymerisiertes cis-Polyacetylen mit vergleichbar hohen Lösungsmittelgehalten verpressen und anschließend kalandrieren. Das Endprodukt enthält vor dem Trocknungsvorgang noch etwa 5% Lösungsmittel.

Eine Herstellung von Formteilen, die ebenfalls nicht als Urform- Verfahren anzusehen ist, beschreiben Chien et al., Makromol. Chem., Rapid Comm. *4,* 5—10 (1983) welche makroskopische Polyacetylenbänder durch spezielle Polymerisationsmethoden erzeugt haben.

J. Hocker et al (EP—OS 62211) haben die Herstellung von Formteilen aus Polyacetylen enthaltenden Fremdpolymeren beschrieben; dabei werden die Fremdpolymeren in einem Lösungsmittel gelöst, in dem sich makroskopisch große Polyacetylenteilchen ("Polyacetylenketten") befinden. Die Formgebung geschieht durch Entfernung der Lösungsmittel. Gegebenenfalls wird zur Beschleunigung der Suspensionsbildung ein Ultraturrax®-Rührgerät eingesetzt, wobei die Faserstruktur der Teilchen erhalten bleiben soll. Die so erhaltenen Formteile weisen nur eine vergleichsweise geringe Leitfähigkeit auf. Auch die weitere EP—OS 84330 derselben Autoren befaßt sich mit Versuchen, Formteile aus Polyacetylen enthaltenden Kunststoffen zu erhalten, ohne eigentliche Urformverfahren anzuwenden. In den beschriebenen Beispielen wird versucht, Laminate mit einer (dotierten) Polyacetylenschicht zu erzeugen, indem Polyacetylen in Form einer Suspension in einem leicht verdampfbaren Lösungsmittel wie Methylenchlorid aufgesprüht wird. Die so erzielte Polyacetylenschicht auf einem Polymeren oder einem anorganischen Träger wird anschließend mit einer weiteren Schutzschicht überzogen.

Für Polypyrrol wird in der DE—OS 32 27 914 ein Verfahren angegeben, bei dem Polypyrrol bei Temperaturen von 150 bis 300°C und Drucken von 50 bis 150 bar verpreßt wird. Gemäß den Ausführungsbeispielen ist dieses Verfahren zur Herstellung von Mehrschicht-Laminaten aus nicht leitfähigen Polymerfilmen und Polypyrrolfilmen (wie sie unmittelbar aus der elektrochemischen Polymerisation erhalten werden) geeignet. Vorzugsweise werden Polypyrrol und dessen verschiedene Copolymere in Form von Folien auf Polyester-, Polyethylen- bzw. Polyacrylnitrilfolien oder auf Polyurethan- bzw. Polystyrolschaum aufgepreßt. Eine Verformung des leitfähigen Polypyrrols selbst findet offenbar nicht statt, sondern das thermoplastische Fließvermögen der nicht leitenden Polymerfilme ermöglicht anscheinend deren Verwendung als Bindemittel. Homogene Formkörper aus einer kontinuierlichen Polypyrrolphase bzw. ausschließlich aus Polypyrrol bestehende Formkörper lassen sich auf diese Weise nicht herstellen. Ein weiterer Nachteil besteht darin, daß die Verfahrensdauer 2 bis 10 Minuten unter nicht inerten Bedingungen beträgt, wobei sich oberflächlich dünne, nicht leitende Schichten ausbilden und chemische Abbauvorgänge nicht auszuschließen sind.

5. Einfluß von Druck

Bereits zu Beginn der Arbeiten an leitfähigen Polymeren und organischen Leitern war man bemüht, die in Form feiner polykristalliner Pulver anfallenden Stoffe zumindest kurzfristig in eine Form zu bringen, in der man die elektrischen und photoelektrischen Eigenschaften prüfen kann. Es ist daher häufiger die Rede davon, daß die Pulver kalt unter Drucken von mehreren bar bis zu ca. 300 bar zu einer spröden Platte zusammengepreßt wurden, vergl. u.a. F. Beck, Ber. deut. Bunsenges. Phys. Chem. *68,* 558 bis 567 (1964).

Für Polypyrrol wird in der älteren, nachveröffentlichten EP—OS 132 709 angegeben, daß bei Temperaturen zwischen 150 und 300°C und Drucken von 50 bis 200 bar aus feinteiligen Pyrrol-Polymerisaten Formteile erzeugt werden können. Dabei wird unter Normalatmosphäre gearbeitet. Es fehlen in der EP—OS Ausführungsbeispiele für diese Arbeitsweise und es finden sich dort auch keine näheren Angaben zur Oberfläche, Farbe, Homogenität, Festigkeit und Leitfähigkeit der erhaltenen Formteile. Vermutlich werden auf diese Weise relativ spröde "Tabletten" erhalten, wie sie oft zur Leitfähigkeitsmessung von pulverförmigen organischen Leitern verwendet werden, nicht aber um homogene feste und insebesondere oberflächlich glänzende Formteile.

V. Zhorin, J. Appl. Sci. *28,* 2467 bis 2472 (1983) befaßt sich mit dem Einfluß von hohem Druck auf die elektrophysikalischen Eigenschaften von leitfähigen Polymeren und stellt fest, daß mit der Anwendung von hohem Druck die Leitfähigkeit der Prüflinge steigt, bei nachlassendem Druck aber reversibel wieder absinkt. Die Autoren wendeten bei Raumtemperatur und unter Normalatmosphäre Drucke bis $2,5 \times 10^3$ MPa an und beobachteten dabei keine prinzipiellen morphologischen Veränderungen. Die Erhöhung der Leitfähigkeit wird auf ein engeres Zusammenrücken der Energiebänder zurückgeführt.

## Zusammenfassung und Aufgabenstellung

Es ist somit festzustellen, daß die leitfähigen Polymeren und die organischen Leiter gemeinsam eine Reihe von einschränkenden Nachteilen (Unlöslichkeit, schlechte Dispergierbarkeit, fehlende Erweichungsbereiche bzw. Glasübergangspunkte, nicht vorhandene Schmelzpunkte sowie mangelnde Stabilität gegenüber Sauerstoff und Hitze sowie teilweise gegenüber Vernetzungsprozessen) zeigen, die ihre Einführung in die technische Verwertung bis heute verhindern. Nach dem derzeitigen Wissensstand beruhen diese Nachteile ebneso wie die Leitfähigkeit vor allem auf dem relativ hohen Kristallinitätsgrad der leitfähigen Polymeren und organischen Leiter.

Die technische Verwertbarkeit von Polyacetylen und den meisten übrigen leitfähigen Polymeren wird besonders dadurch behindert, daß die elektrischen und vor allem auch die mechanischen Eigenschaften bereits nach kurzur Zeit und insbesondere nach der Komplexierung sehr schnell abnehmen. Es wäre daher ein außerordentlicher Fortschritt, wenn es gelänge, leitfähige Polymere zu verformen und dabei sowohl während als auch nach der Verformung eine Stabilisierung gegen Abbau durch Sauerstoff, Feuchtigkeit, Hitze und innere Vernetzungsprozesse zu erreichen. Von besonderer Bedeutung wäre es, Verfahren zu finden, mit denen die leitfähigen Polymeren als solche oder in physikalisch geringfügig modifizierter Form durch Urformprozesse verformt und möglicherweise gleichzeitig stabilisiert werden können. Es wäre nach den heutigen Stand des Wissens ein entscheidender technischer Durchbruch, wenn die Erhöhung der elektrischen Leitfähigkeit mit der Formteil-Herstellung kombiniert werden und die erreichten Eigenschaften auch unter Gebrauchsbedingungen erhalten bleiben würden.

Der Erfindung liegt demgemäß die Aufgabe zugrunde, einen Weg zu finden, elektrisch leitfähige Polymere und organische Leiter wie PAc, PPP, PPy, PPhc sowie TCNQ-Charge-Transfer-Komplexe etc. zu homogenen Formkörpern mit guten mechanischen Eigenschaften und auch mit erhöhter elektrischer Leitfähigkeit zu verarbeiten und dabei gleichzeitig eine Stabilisierung gegen die verschiedenen bekannten Abbaumechanismen, insbesondere durch oxidativen Einfluß oder durch Vernetzung zu erreichen.

## Die Erfindung

Gegenstand der Erfindung ist eine Verfahren zur Herstellung von Formteilen aus elektrisch leitfähigen organischen Polymeren und/oder organischen Leitern, welches dadurch gekennzeichnet ist, daß man gut entgaste Proben der im wesentlichen lösungsmittel-, monomer- und oligomerfreien leitfähigen Polymeren und/oder organischen Leiter unter Feuchtigkeits- und Sauerstoff-Ausschluß bei einer Temperatur, welche oberhalb von 40°C und unterhalb der Zersetzungstemperatur der leitfähigen Polymeren und/oder organischen Leiter liegt, so lange unter einem Druck von mindestens 500 bar verformt, bis sich eine kontinuierliche Phase mit hochglänzender, metallisch erscheinender Oberfläche ausbildet, die visuell betrachtet vom Ausgangsmaterial verschieden ist. Dabei können auch Mischungen verschiedener leitfähiger organischer Polymerer oder organischer Leiter eingesetzt werden. Es kann sich um frische oder gealterte Proben der leitfähigen Polymeren oder organischen Leiter handeln, solange noch kein oxidativer Abbau eingetreten ist. Letzterer ist bei Polyacetylen im IR-Spektrum anhand der Carbonylbande bei $1700 \text{ cm}^{-1}$ leicht zu erkennen.

Charakteristisch für das Entstehen einer kontinuierlichen Phase ist das Auftreten einer intensiv glänzenden, metallisch erscheinenden Oberfläche. Unter dem Elektronnenmikroskop kann die erhaltene fehlerfreie Oberfläche von Polyacetylen erst bei ca. 20.000-facher Vergrößerung näher aufgelöst werden, wobei man die kugelförmigen Primärteilchen nicht mehr als diskrete Partikel erkennen kann, da sie wie durch einen Schleier (= kontinuierliche Matrix) verborgen kaum zu sehen sind.

Wenn man z.B. undotiertes oder dotiertes trans-Polyacetylen (schwarz) einsetzt, erhält man jeweils eine gleichmäßige und fehlerfreie, hochglänzende, golden-metallisch erscheinende Oberfläche bzw. Abbildung des Preßwerkzeuges. cis-Polyacetylen ergibt eine silbern-metallisch glänzende Oberfläche, wenn man unterhalb des Isomerisierungstemperatur verpreßt, oberhalb dieser Temperatur (das IR-Spektrum zeigt eine vollständige Isomerisierung zum trans-Isomeren) dagegen ein golden-metallisches Aussehen. Polyphthalocyanine lassen sich kalt nicht verpressen, beim erfindungsgemäßen Vorgehen schlägt die matte blaue Farbe des μ-Cyano-(phthalocyaninato)kobalt(III) in eine intensiv glänzende, hellrotviolette Farbe um. Elektrochemisch synthetisiertes Polypyrrol-dodecylsulfonat verändert sich von matt-schwarz in eine intensiv schwarz-metallische Oberfläche, die bei Tageslicht einen Blaustich zeigt.

Aufgrund aller Angaben in der Literatur ist es außerordentlich überraschend, daß sich z.B. Polyacetylen trotz fehlender thermoplastischer Eigenschaften nd angesichts der beschriebenen oxidativen und thermischen Instabilität und seiner Neigung zur Vernetzung derart verarbeiten läßt. Die elektrische Leitfähigkeit der erfindungsgemäß hergestellten Formkörper steigt um mehrere 10er-Potenzen an, beim Polyacetylen z.B. von $10^{-9}$ bis $10^{-12}$ Siemens/cm auf mehr als $10^{-5}$, z.B. $10^{-4}$ Siemens/cm. Dabei liegen keine Anzeichen für eine Vernetzung vor und es wird auch kein Abbau beobachtet. Noch überraschender ist die erfindungsgemäße Verarbeitbarkeit von beispielsweise mit Jod oder $FeCl_3$ dotiertem Polyacetylen, das vorzugsweise homogen dotiert (vergl. S. 17) sein soll.

Überraschend weisen die so erhaltenen Formteile ferner beträchtliche mechanische Festigkeit und gute elastische Eigenschaften auf, die ihre Weiterverarbeitung zu verschiedenen elektrischen Bauelementen ermöglicht. Abhängig von den jeweiligen elektrischen Eigenschaften können die Formteile erfindungsgemäß als Leiter, Halbleiter oder Fotoleiter Verwendung finden, z.B. als Halbleiterrelais, Thyristoren oder dergleichen sowie in Batterien oder in fotovoltaischen Anwendungen, wie in der Solartechnik zur direkten Erzeugung von elektrischem Strom aus Licht. Noch überraschender ist es, daß die zuvor erwähnten guten mechanischen Eigenschaften auch nach oxidativer Komplexierung, z.B. mit Jod oder Eisen(III)- chlorid erhalten bleiben, was in völligem Gegensatz zu den Erfahrungen steht, die bislang mit diesen Polymeren gemacht wurden. Die sogenannten "freitragenden Folien" von Shirakawa verspröden bei oxidativer Komplexierung völlig.

Beim Verformen der leitfähigen Polymeren oder organischen Leiter werden Temperaturen angewendet, die oberhalb von 40, vorzugsweise oberhalb von 100°C, auf jeden Fall aber unterhalb der Zersetzungstemperatur des jeweiligen Stoffes liegen. Für Polyacetylen bedeutet dies beispielsweise, daß die Temperatur 340°C nicht überschreiten darf. Bei Polyphthalocyaninen liegt die anwendbare Höchsttemperatur bei ca. 220 bis 250°C.

Der Druck soll mindestens 500 bar betragen; bevorzugt werden Drucke über 1.000 bar und bis zu 30.000 bar. Normalerweise reicht eine Preßdauer von wenigen Sekunden, bespielsweise von 15 bis 30 sec aus, wobei die Dauer umso kürzer sein kann, je höher der angewendete Preßdruck ist und je dünner das Formteil werden soll. Im allgemeinen können die Zeiten, während der das Pulver heiß unter Druck verformt wird, zwischen 5 und 200 sec. liegen. PPy, PPP und PPhc erfordern im allgemeinen höhere Preßdrucke, -zeiten und -temperaturen als PAc.

Angesichts der oxidativen Empfindlichkeit der Stoffe und zur Herstellung fehlerfreier, insbesondere porenfreier Formteile müssen gut entgaste Proben verwendet werden. Die Verformung erfolgt unter Feuchtigkeits- und Sauerstoffausschluß, bespielsweise unter einer Inertgasatmosphäre, vorzugsweise unter Stickstoff als Schutzgas. Dasselbe Ziel kann auch durch Arbeiten unter Vakuum erreicht werden, wobei der Restdruck vorzugsweise weniger als 100 mbar beträgt.

Während die elektrische Leitfähigkeit von undotiertem Polyacetylen nur etwa $10^{-9}$ bis $10^{-12}$ Siemens/cm beträgt, tritt bei der erfindungsgemäßen Verdichtung ein Anstieg der Leitfähigkeit auf mehr als $10^{-4}$ Siemens/cm ein. Für eine weitere Steigerung der Leitfähigkeit ist es wünschenswert, das Polymer vor oder nach der Verformung mit an sich bekannten Dotierungsmitteln zur p-Dotierung wie Jod, Antimon- oder Arsenpentafluorid, Tetrafluorborsäure $HBF_4$, Schwefeltrioxid, Perchloraten, Sulfaten oder mit Metallsalzen wie Eisen(III)-chlorid bzw. zur n-Dotierung z.B. Butyl-Lithium, Diphenylhexyl-Lithium, Naphthalin-Natrium zu komplexieren. Vorzugsweise erfolgt die Komplexierung vor der Verformung zu Formkörpern. Eine besonders homogene Dotierung erreicht man, wenn man die Dotierung des Polymeren mit dem Dotierungsmittel in Lösung unter Einwirkung von Ultraschall ausführt, wobei entweder die fertig polymerisierten, aber undotierten leitfähigen Polymeren (z.B. PAc oder PPhc) oder die Monomeren (z.B. Pyrrol) eingesetzt werden. Letztere werden gleichzeitig polymerisiert und dotiert (vergl. hierzu die Parallelanmeldung . . . . . entsprechend DE—P 34 22 316.9). Durch die homogene Dotierung wird die erfindungsgemäße Weiterverarbeitung hinsichtlich der erzielbaren Ergebnisse erheblich verbessert.

Gemäß einer bevorzugten Ausführungsform werden übliche Antioxidantien (z.B. phenolische Antioxidantien) und/oder Vernetzungsinhibitoren (z.B. Phosphite) in einer Menge von 0,01 bis 0,5 Gew.% zugesetzt, um die Stabilität zu erhöhen. Auch andere übliche hilfsstoffe wie Gleitmittel etc. können eingesetzt erden. Ferner ist es zum Sauerstoff- und Feuchtigkeitsschutz möglich, die Formteile mit einem Coating aus einem sauerstoff- und wasserundurchlässigen Polymer, z.B. aus Polyvinylidenfluorid oder dergleichen, zu versehen. Dies kann entweder durch Zusatz von etwa 1 bis 5 Gew.% des Schutzpolymeren vor dem Verformen oder durch nachträgliches Beschichten erfolgen. Eine Schutzschicht von wenigen μm Dicke reicht im allgemeinen aus.

Eine erschöpfende Erklärung für den Erfolg des erfindungsgemäßen Verfahrens kann derzeit nicht gegeben werden. Wenn man die aus der Literatur bekannten Eigenshaften des Polyacetylens (hohe Kristallinität, kein Schmelz- und Erwiechungsbereich, Instabilität, große Neigung zur Vernetzung vor allem bei der cis trans-Isomerisierung und bei thermischer Belastung, Versprödung bei Dotierung und auch bei längerer Lagerung) berücksichtigt, kann eine vernetzungsfreie cis/ trans-Isomerisierung beim Vakuum-Heiß-Verformen unter Bildung homogener, elastischer und stabiler hochglänzender Formkörper aus ggf. dotiertem, frischem oder länger gelagertem trans-Polyacetylen ebenso wie die Möglichkeit der nachträglichen Dotierung von erfindungsgemäß erhaltenen Formteilen ohne wesentliche Schädigung der mechanischen Eigenschaften und Beeinträchtigung der Stabilität überhaupt nicht erklärt werden. Besonders unerwartet ist das Auftreten homogener Phasen ("Verschmelzen" der vorher diskreten Primärteilchen), welches optisch durch hochglänzende metallisch erscheindende Oberflächen mit andersartiger Färbung sowie elektronenmikroskopisch durch dad Ineinanderfließen der Agglomerate und Primärteilchen erkennbar ist.

Nur wenn man annimmt, daß es sich bei den leitfähigen Polymeren und organischen Leitern nicht um kristalline Festkörper, sondern um Flüssigkristalle bzw. hochgeordnete Flüssigkeiten handelt, kann man die überraschenden Ergebnise der Erfindung nachträglich deuten. Obwohl hierzu bislang ein direkter Beweis fehlt, können verschiedene widersprüchliche Phänomene z.B. bei Polyacetylen miteinander in Einklang gebracht werden, wenn man annimmt:

Die "Duktilität" von frischem cis-Polyacetylen resultiert aus noch nicht vollständiger Flüssigkristallordnung,

die Versprödung von undotierten "Folien" ist Folge der fortschreitenden Höherorientierung der flüssigkristallinen Phase innerhalb der kugelförmigen Primärpartikel, so daß die Kontakte der Teilchen untereinander mehr und mehr punktförmig werden,

die Versprödung durch oxidativen Abbau ist vorrangig Folge der durch oberflächliche Oxidation erhöhten Abstoßungskraft zwischen den Primärteilchen,

die Versprödung dotierter "Folien" ist weniger ein Vernetzungsvorgang als vielmehr Folge erhöhter "Umordnung" im Flüssigkristal und eine Zerstörung von Resten durchgehender homogener Phasen; sie wird verstärkt durch die Inhomogenität der Dotierung, welche zu Umordnungsprozessen z.B. durch Diffusion führt.

die Versprödung kann erfindungsgemäß durch Druck- und Wärmeanwendung aufgehoben werden, weil dadurch die Flüssigkristalle wieder geordnet werden und makroskopische Bereiche kontinulericher homogener Phasen entstehen,

die Herstellung homogener Phasen geschieht durch echtes Fließen einer (hochviskosen) Flüssigkeit,

die Herstellung hochstabiler und hochleitfähiger Formteile aus homogen dotierten leitfähigen Polymeren, z.B. aus homogen mit $J_2$ dotiertem PAc, ist möglich in Folge verbesserter "Fließfähigkeit" der homogenen Ausgangsstoffe im Vergleich zu heterogen dotierten Polymeren; die drastisch erhöhte Stabilität resultiert aus der Homogenität der Dotierung *und* der Homogenität des Formteils (einheitliche Phasen), die keinen Anlaß zu Umordnungen gibt,

die von Zhorin beobachtete reversible Druckabhängigkeit der Leitfähigkeit beruht nur auf der Erhöhung der Anzahl von elektrisch leitfähigen Kontaktstellen, ohne daß wie beim erfindungsgemäßen Verfahren eine Umordnung der Flüssigkristalle und eine Ausbildung makroskopischer flüssigkristallin geordneter Bereiche erfolgt,

der visuell beobachtete Farbwechsel beruht auf der makroskopischen flüssigkristallinen Ordnung in der Masse nach dem Verformen.

die markante Stabilitätserhöhung resultiert aus a) dem Unvermögen der erfindungsgemäß geformten Stoffe, die hohe Flüssigkristall-Ordnung ohne äußere Einflüsse zu erniedrigen, b) der nur 10-erPotenzen kleineren inneren und äußeren, Sauerstoff und Wasser zugänglichen Oberflache, c) der im hochgeordneten Flüssigkristall gegen Null gehenden Tendenz zu Vernetzungsreaktionen (= Volumenzunahme!).

Bei sehr schwierig herstellbaren besonders dünnen Preßfolien aus Polyacetylen wurden im Polarisationsmikroskop gelegentlich Phänomene beobachtet, wie sie für Flüssigkristalle charakteristisch sind. Est ist ferner gelungen, von erfindungsgemäß hergestellten Formteilen mit einem Miktrotom Dünnschnitte zu erzeugen, die im Polarisationsmikroscop im Dunkelfeld durchsichtig sind und die für Kristalle bzw. Füssigkristalle charakterische Doppelbrechung zeigen. Die vorstehenden Erklärungsversuche sind zum gegenwärtigen Zeitpunkt noch rein hypothetischer Natur, obwohl die Flüssigkristallhypothese die einzige zu sein scheint, welche an sich dem derzeitigen Stand des Wissens widersprechen. Die eigenen Untersuchungen (vergl. B. Weßling, Makromol. Chem. *185*, 1265—1275 (1984), nach denen im Polyacetylen die kugelförmigen Primärteilchen aus Kristalliten in amorpher Hülle bestehen, könnten nur erklären, daß beim erfindungsgemäßen Heißverformen ein Verdichtungsvorgang zu einer dichtesten Kugelpackung erfolgen kann. Diese Hypothese ermöglicht jedoch noch nicht die widerspruchsfreie Erklärung anderer Phänomene (z.B. Farbumschlag und Stabilitätserhöhung).

Die erfindungsgemäße Heißverformung erfolgt vorzugsweise durch Verpressen, obwohl auch andere Ausführungsformen möglich sind. Zur kontinuierlichen Durchführung eignen sich beispielweise Extruder oder ein sogenannter Ramextruder, wenn er an dem sich hin- und herbewegenden Preßstempel gegen die Außenluft abgedichtet und evakuierbar ist und im Einfülltrichter für eine Entgasung und Schutzgasatmosphäre gesorgt wird. Gleichzeitig muß eine gleichmäßige Vorerwärmung erfolgen.

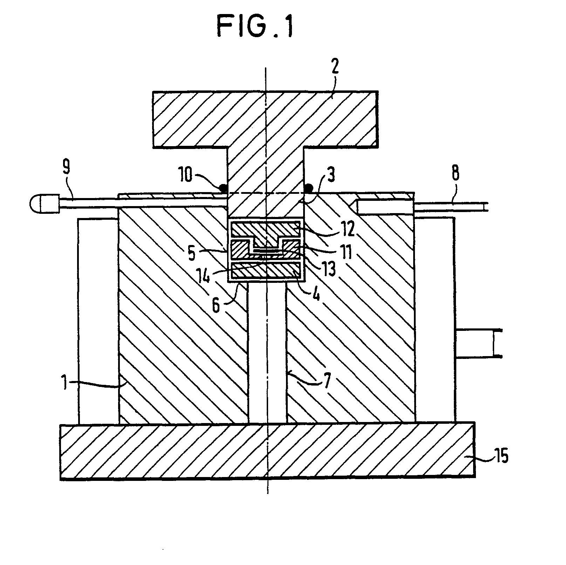

Gegenstand der Erfindung ist ferner eine besonders bevorzugte Preßvorrichtung zur Durchführung des erfindungsgemäßen Verfahrens, welche in Figur 1 schematisch im Schnitt dargestellt ist.

Die Vorrichtung besteht aus einem heizbaren Zylinderblock 1 mit einer Bohrung 5, welche den Preßstempel 2, 3 aufnimmt. Eine Dichtung 10 sorgt für einen luftdichten Abschluß nach außen. Bei der dargestellten Ausführungsform weist die Bohrung 5 eine nach unten offene, durch die Bodenplatte 15 dicht verschlossene Verengung 7 auf; auf der sich dadurch bildenden Schulter 6 liegt eine bewegliche Platte 4 als Gegenlager für den Preßstempel auf.

Zwischen Preßstempel und Gegenlager ist eine Preßkapsel 11, 12 einsetzbar, die sich über die Preßzylinderbohrung 7 und eine Leitung 9 entweder mit Inertgas füllen läßt oder evakuiert werden kann. Die Preßkapsel besteht aus einem als Preßstempel ausgebildeten Deckel 12 und einem Unterteil 11, welches die Probe aufnimmt und mit dem Deckel 12 zusammenwirkt. Bei der gezeigten Ausführungsform ist auf die Bodenfläche des Unterteils 11 der Preßkapsel ein Trägerblech 13 aufgelegt, welches die zu verpressende Probe aufnimmt. Zur Temperaturkontrolle ist in dem Preßblock 1 ein Temperaturfühler 8 eingesetzt.

Zur Durchführung des erfindungsgemäßen Verfahrens wird zunächst die Preßkapsel 11, 12 mit der zu verformenden Probe beschickt, was vorzugsweise unter einem Inertgas geschieht. Anschließend wird die Preßkapsel bei hochgezogenem Preßstempel 2, 3 in die Zylinderbohrung 5 eingeführt, so daß sie auf der Platte 4 steht. Durch Absenken des Preßstempels 2, 3 wird die Zylinderbohrung 5 nach oben verschlossen, so daß über die Leitung 9 Vakuum angelegt werden kann. Nach vollständiger Entgasung der Probe und Aufheizen der Preßkapsel durch den vorgeheizten Zylinderblock 1 auf die gewählte Temperatur wird mittels des Preßstempels 2, 3 die Probe unter dem vorbestimmten Druck für die gewählte Zeitdauer verpreßt. Nach Hochziehen des Preßstempels kann dann die Platte 4 mit der darauf stehenden Preßkapsel durch die Bohrung mit Hilfe eines entsprechenden Werkzeuges angehoben und dann aus der Presse entfernt werden. In gleicher Weise kann nach Abheben des Deckels 12 die Probe zusammen mit dem Trägerblech 13 aus der Preßkapsel entnommen werden, indem beide mit Hilfe eines Werkzeuges durch die Bohrung 14 nach oben geschoben werden. Das Formteil kann gewünschtenfalls anschließend von dem Blech 13 getrennt werden.

Eine Verbesserung des Verformungserebnisses kann dadurch erzielt werden, daß der Preßstempel drehbar ausgebildet ist, während das Gegenlager so verankert ist, daß es keine Drehbewegung auszuführen vermag. Hierdurch wird beim Verpressen gleichzeitig eine Scherung der Masse zwischen dem drehenden Stempel und dem arretierten Gegenlager erzielt.

Bei einer weiteren Ausführungsform der Vorrichtung kann der Preßstempel gleichzeitig als Ultraschallgeber ausgebildet sein, um eine zusätzliche Homogenisierung und Verdichtung der Masse zu erreichen. Bei der Herstellung von dickeren Formteilen mit einer Dicke >100 µm wird vorzugsweise zunächst in der oben beschriebenen Vorrichtung ein Vorformling gepreßt, welcher dann unter Vakuum und unter Einwirkung von Ultraschall bei geringerem Druck zu elektronenmikroskopisch nicht mehr auflösbaren homogenen Phasen durchgeformt wird, wie unter flüssigem Stickstoff erzeugte Bruchflächen beweisen.

Zur näheren Erläuterung der Erfindung sollen die nachfolgenden Beispiele dienen, auf welche die Erfindung jedoch nicht beschränkt ist.

### Beispiel 1

Eine nach der Luttinger-Methode (vergl. B. Weßling, Makromol. Chem. *185*, 1265—1275 (1984) hergestellte Probe von Polyacetylenpulver, die überwiegend cis-Polyacetylen enthielt, wurde bei einer Temperatur von 80°C und unter 16.000 bar Druck in der Presse gemäß Fig. 1 unter einem Vakuum von 3 mbar 5 sec lang gepreßt. Es bildete sich eine silbrig-glänzendes Plättchen, dessen Leitfähigkeit $2,3 \times 10^{-5}$ Siemens/cm betrug. Die Leitfähigkeit der ursprünglichen Pulverprobe lag bei $10^{-10}$ Siemens/cm.

### Beispiel 2

Eine Probe Acetylenpulver gemäß Beispiel 1 wurde zunächst eine Stunde lang bei 150°C getempert und dadurch in reines trans- Polyacetylen überführt. Wie in Beispiel 1 beschrieben wurde die Probe dann bei 150°C 30 sec lang unter einem Vakuum von 3 mbar verpreßt, wodurch sich ein golden-schimmerndes Plättchen mit hochglänzender glatter Oberfläche bildete. Die Leitfähigkeit stieg hierbei von $10^{-9}$ auf $5 \times 10^{-4}$ Siemens/cm an. Die vollkommen glatte Oberfläche zeigte erst unter dem Elektronen-Mikroskop bei 20.000-facher Vergrößerung eine schwache Struktur. Das erhaltene Formteil war elastisch.

### Beispiel 3

Eine Polyacetylenprobe wurde wie in Beispiel 2 beschrieben bei 100 und 150°C jeweils verschieden lange Zeit einem Druck von 12.000 bar unterworfen. Das Polyacetylen wurde dabei unter einem Stickstoffstrom in die Preßkapsel eingefüllt und dann unter dynamischem Vakuum gepreßt. Die entstehenden Formteile (zylindrische Platten von 12 mm Durchmesser und etwa 1 bis 2 mm Dicke) waren hart und mechanisch stabil. Die Oberfläche glänzte golden und zeigte unter dem Mikroskop die Struktur des Preßstempels. Die Durchgangsleitfähigkeit wurde bei einem Druck von 1.000 bar über die gesamte Fläche gemessen. Die erhaltenen Meßwerte sind in der folgenden Tabelle 1 zusammengestellt:

### Tabelle 1

| Preßzeit (sec) | Leitfähigkeit (Siemens/cm) | |
|---|---|---|
| | bei 100°C | bei 150°C |
| 20 | $1,3 \times 10^{-4}$ | $5,1 \times 10^{-4}$ |
| 39 | $2,3 \times 10^{-4}$ | $5,7 \times 10^{-4}$ |
| 60 | $2,5 \times 10^{-4}$ | $5,7 \times 10^{-4}$ |
| 120 | $2,7 \times 10^{-4}$ | $5,5 \times 10^{-4}$ |
| 240 | $4,4 \times 10^{-4}$ | $7,6 \times 10^{-4}$ |

Im Rahmen der Meßgenauigkeit ergibt sich bei konstanter Temperatur eine geringfügige Steigerung der Leitfähigkeit in Abhängigkeit von der Preßdauer, während das bei 150°C gepreßte Polyacetylen gegenüber dem bei 100°C gepreßten etwa die doppelte spezifische Leitfähigkeit aufweist.

### Beispiel 4

Zunächst wurden 300 mg Polyacetylen in einer Lösung von 5 g $FeCl_3$ in 100 ml Acetonitril suspendiert und 24 Stunden lang bei Raumtemperatur belassen. Danach wurde die Lösung abgesaugt und der Festkörper mit wenig Acetonitril gewaschen und im Vakuum getrocknet. Das so erhaltene, oxidativ komplexierte pulverförmige Polyacetylen wurde gemäß Beispiel 3 unter Stickstoffatmosphäre in die kalte Preßkapsel gefüllt und anschließend unter Vakuum bei 150°C unter 12000 bar heiß gepreßt. Es resultierte auch hier ein festes Formteil, das eine hochglänzende goldene Oberfläche besaß. Die spezifische Leitfähigkeit betrug $2,9 \times 10^{-1}$ Siemens/cm.

## Beispiel 5

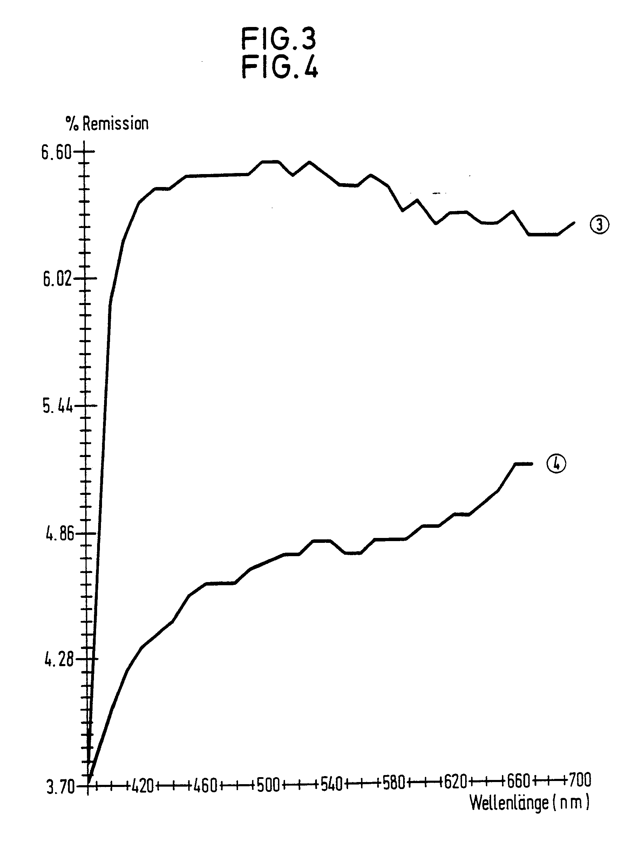

Analog Beispiel 1 wurde eine Probe von Polypyrrol-dodecylsulfonat bei 190°C 40 sec lang unter einem Vakuum von 3 mbar gepreßt. Es wurde ein stabiles blau-schwarz metallisch glänzendes Formteil erhalten. Die Leitfähigkeit des Formteils von 20 Siemens/cm entsprach derjenigen der Ausgangsprobe. Das Remissionsspektrum zeigt Figur 3.

Die analoge Verarbeitung eines durch Aufschlämmen in einem geeigneten Verdünnungsmittel unter Einwirkung von Ultraschall nachhomogenisierten feinteiligen PPy ergibt eine verbesserte Stabilität, Leitfähigkeit und Farbe; das Remissionsspektrum zeigt Figur 4.

## Beispiel 6

Eine Probe von Poly-$\mu$-cyano-(phthalocyaninato)kobalt(III) in Form eines blauen Pulvers wurde gemäß Beispiel 1 bei 150°C 20 sec lang unter einem Vakuum von 3 mbar gepreßt. Das gebildete Formteil besaß einen stark metallischen hellrot-violetten Glanz, im Gegensatz zu einer kaltgepreßten Probe, die nur punktförmig violett schimmerte und pulverförmig blieb. Die mechanische Festigkeit des Formlings war geringer als bei Polyacetylen, die Leitfähigkeit stieg jedoch von $<10^{-2}$ auf ca. $10^{-1}$ Siemens/cm an. Durch Erhöhung der Temperatur auf 190°C und der Preßzeiten auf 40 sec konnten die mechanischen Eigenschaften noch wesentlich verbessert werden.

## Beispiel 7

Ein gemäß Beispiel 2 erhaltenes Formteil aus Polyacetylen, in das zur kontinuierlichen Messung der Leitfähigkeit zwei Kupferdrähte eingepreßt worden waren, wurde bei Raumtemperatur einer mit Joddampf gesättigten Stickstoffatmosphäre ausgesetzt. Innerhalb von 4 Tagen stieg die Leitfähigkeit von $3,6 \times 10^{-5}$ Siemens/cm auf 16 Siemens/cm an. Die mechanische Stabilität blieb dabei erhalten.

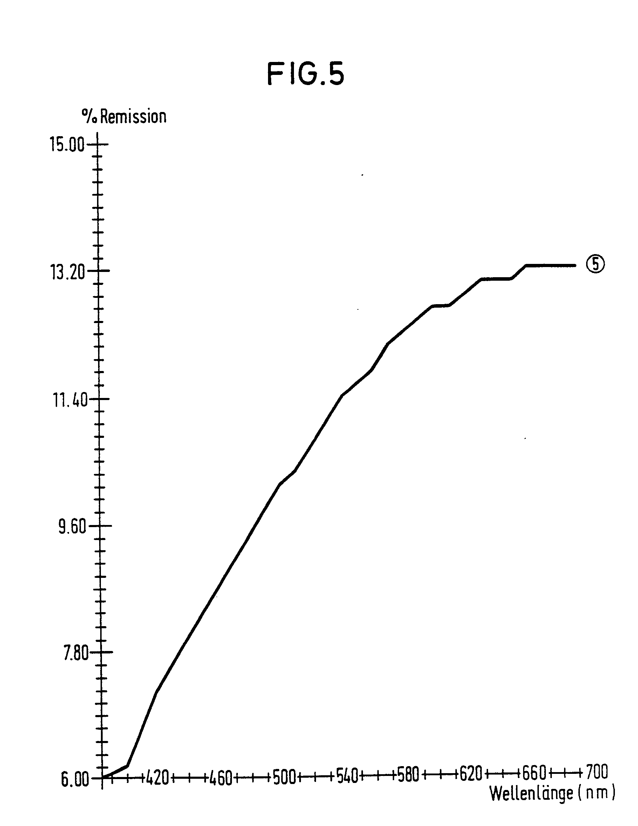

In analoger Weise wurde homogen mit Jod dotiertes Polyacetylen bei Raumtemperatur und bei 150°C verpreßt, wobei Formteile mit rot-goldenem metallischem Glanz und einer Leitfähigkeit von 0,5 Siemens/cm und jeweils sehr guten mechanischen Eigenschaften erhalten wurden. Das Remissionsspektrum der letzteren Probe zeigt Figur 5. Die Leitfähigkeit nimmt auch bei Lagerung an Luft über mehrere Wochen hinweg praktisch nicht ab, die Farbe bleibt langfristig erhalten.

## Beispiel 8

Ein nach Bespiel 3 erhaltenes Formteil von 1,2 cm Durchmesser und mit einer Dicke von 0,5 mm wurde 3 Tage lang in einer Lösung von 5 g $FeCl_3$ in 50 ml Acetonitril bei Raumtemperatur belassen. Die Leitfähigkeit stieg von $4,8 \times 10^{-7}$ Siemens/cm auf $1,3 \times 10^{-2}$ Siemens/cm an.

## Beispiel 9

Ein Formteil gemäß Beispiel 12 wurde 3 Tage lang in einer Lösung von 5 g $J_2$ in 50 ml $CCl_4$ bei Raumtemperatur belassen. Die Leitfähigkeit stieg von $4,5 \times 10^{-7}$ Siemens/cm auf $2 \times 10^{-1}$ Siemens/cm an.

## Beispiel 10

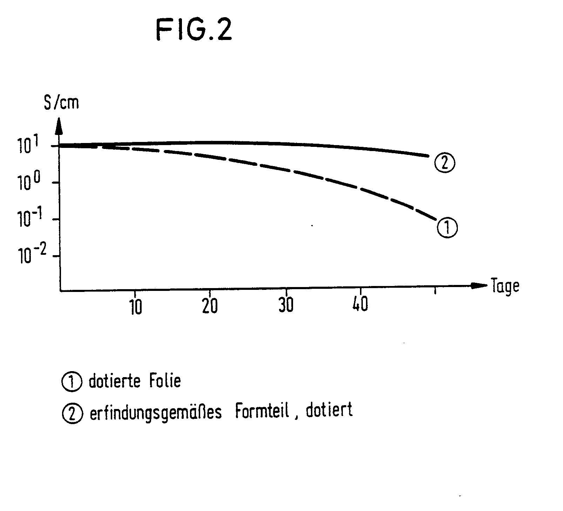

Eine Polyacetylen "Folie" (hergestellt nach Luttinger unter Verwendung der von G. Wegner 1981 angegebenen Abwandlung) und das trans-Polyacetylen-Formteil des Beispiels 2 wurden mit Jod jeweils bis zur gleichen Leitfähigkeit (ca. 10 Siemens/cm) komplexiert, wie dies in Beispiel 7 beschrieben ist. Anschließend wurden die Teile unter $N_2$ gelagert und die Leitfähigkeit wurde einmal je Woche geprüft. Die Leitfähigkeit des erfindungsgemäßen Formteils veränderte sich während des Meßzeitraums praktisch überhaupt nicht, wie die graphische Darstellung der Fig. 2 zeigt.

## Beispiel 11

Ein gemäß Beispiel 2 mit eingepreßten Kupferdrähten hergestelltes dünnes Formteil wurde dem Licht einer 150 W Halogenkaltlichtlampe ausgesetzt. Die zwischen den Kupferdrähten gemessene Leitfähigkeit stieg dabei von $4,1 \times 10^{-4}$ Siemens/cm im Dunkeln auf $9,4 \times 10^{-4}$ Siemens/cm bei Belichtung an.

## Beispiel 12

Verschiedene Proben leitfähiger Polymerer und organischer Leiter wurden bei Raumtemperatur und bei 150°C gepreßt, wobei die Proben jeweils 30 sec lang einem Preßdruck von 12.000 bar unterworfen wurden. Die dabei erhaltenen Ergebnisse sind in der folgenden Tabelle 2 zusammengestellt:

Tabelle 2

| Ausgangsmaterial | gepreßt bei Raumtemperatur | gepreßt bei 150° unter dynamischem Vakuum |
|---|---|---|
| cis-PAc (schwarzes Pulver) | silberglänzendes, weiches Formteil | silber-golden metallisch glänzendes, mechanisch stabiles, elastisches Formteil |
| trans-PAc (schwarzes Pulver) | schwarzer, zerbrechlicher Preßling | golden-metallisch glänzendes, mechanisch stabiles, elastisches Formteil |
| Mit $J_2$ homogen dotiertes PAc | golden glänzendes, stabiles, elastisches leitfähiges Formteil | rotgolden glänzendes, stabiles, elastisches hochleitfähiges Formteil |
| Mit $FeCl_3$ dotiertes PAc (schwarzes Pulver) | schwarzer Preßling, zerfällt beim Entformen zu Pulver | schwach glänzendes, mechanisch stabiles Formteil |
| Polypyrrol-dodecylsulfonat (schwarzes Pulver) | schwarzes Pulver | schwarz metallisch glänzendes Formteil, mit bläulichem Schimmer; mechanisch nicht sehr stabil; erst bei >190°C erhält man stabile Formteile |
| PPy, nachbehandelt (nachhomogenisiert) | zerbrechliches schwarzes Formteil | sehr stabiles, schwarz-blau metallisch glänzendes, hochleitfähiges Formteil |
| Poly-μ-cyano (phthalocyaninato)-Kobalt(III) (blaues Pulver) | blau bis violetter Preßling, der beim Entformen zerfällt | mechanisch etwas festeres Formteil (weitere Erhöhung der Festigkeit nach Pressen bei ca. 190°C) mit starkem, hellrot-violetten, metallischen Glanz |

## Patentansprüche

1. Verfahren zur Herstellung von Formteilen aus elektrisch leitfähigen organischen Polymeren und/ oder organischen Leitern, dadurch gekennzeichnet, daß man gut entgaste Proben der im wesentlichen lösungsmittel-, monomer- und oligomerfreien leitfähigen Polymeren und/oder organischen Leiter unter Feuchtigkeits- und Sauerstoff-Ausschluß bei einer Temperatur, welche oberhalb von 40°C und unterhalb der Zersetzungstemperatur der leitfähigen Polymeren und/oder organischen Leiter liegt, so lange unter einem Druck von mindestens 500 bar verformt, bis sich eine kontinuierliche Phase mit hochglänzender, metallisch erscheinender Oberfläche ausbildet, die visuell betrachtet farblich vom Ausgangsmaterial verschieden ist.

2. Verfahren nach Anspruch 1, dadurch gekennzeichnet, daß man einen Druck zwischen 1.000 und 30.000 bar anwendet.

3. Verfahren nach einem der Ansprüche 1 oder 2, dadurch gekennzeichnet, daß man die Leitfähigkeit des elektrisch leitfähigen Polymeren durch Dotieren (Komplexieren) vor oder nach der Verformung erhöht, wobei vorzugsweise homogen dotiert wird.

4. Verfahren nach einem der Ansprüche 1 bis 3, dadurch gekennzeichnet, daß man die Verformung unter Inertgasatmosphäre oder unter einem Vakuum von weniger als 100 mbar Restdruck durchführt.

5. Verfahren nach einem der Ansprüche 1 bis 4, dadurch gekennzeichnet, daß man vor dem Verformen übliche Antioxidantien und/oder Vernetzungsinhibitoren in einer Menge von 0,01 bis 0,5 Gew.% und gegebenenfalls weitere übliche Verarbeitungshilfsmittel zusetzt.

6. Verfahren nach einem der Ansprüche 1 bis 5, dadurch gekennzeichnet, daß man vor dem Verformen 0,5 bis 5 Gew.% eines den Sauerstoff- und Wasser-Durchtritt sperrenden Polymeren zusetzt oder das Formteil nachträglich mit einem derartigen Polymeren überzieht.

7. Verfahren nach einem der Ansprüche 1 bis 6, dadurch gekennzeichnet, daß man die Verformung durch Pressen vornimmt.

8. Verfahren nach einem der Ansprüche 1 bis 7, dadurch gekennzeichnet, daß man zum kontinuierlichen Verpressen einen Extruder oder einen Ramextruder verwendet, wobei das Preßgut unter Vakuum zugeführt und gehalten wird.

9. Verfahren nach einem der Ansprüche 1 bis 8, dadurch gekennzeichnet, daß man mittels Koextrusion oder Mehrkomponenten-Spritzguß mehrschichtige Formteile, Folien oder Platten erzeugt.

10. Verfahren nach Anspruch 9, dadurch gekennzeichnet, daß man Produkte herstellt, deren äußere Schichten aus einem Polymer mit niedrigem Sauerstoff- und/oder Wasserdampf-Permeabilitäts-Koeffizienten bestehen, welches isolierende oder antistatische Eigenschaften aufweisen kann, während die Kernschicht aus einem elektrisch leitfähigen bis hochleitfähigen Polymer besteht.

11. Vorrichtung zur Durchführung des Verfahrens der Ansprüche 1 bis 10 in Form einer beheizbaren Presse, gekennzeichnet durch eine zwischen einem Preßstempel (2, 3) und einem Gegenlager (4) einsetzbare Preßkapsel (11, 12), die über die Preßzylinderbohrung (7) und eine Leitung (9) mit Inertgas füllbar oder evakuierbar ist.

12. Vorrichtung nach Anspruch 11, dadurch gekennzeichnet, daß das Gegenlager aus einer beweglichen Platte (4) besteht, die auf der Schulter (6) einer nach unten offenen Verengung (7) der Zylinderbohrung (5) aufliegt.

13. Vorrichtung nach einem der Ansprüche 11 oder 12, dadurch gekennzeichnet, daß der Deckel (12) der Preßkapsel als Preßstempel ausgebildet ist, welcher mit dem Unterteil (11) der Preßkapsel zusammenwirkt.

14. Vorrichtung nach einem der Ansprüche 11 bis 13, dadurch gekennzeichnet, daß der Preßstempel drehbar ausgebildet und die das Gegenlager bildende bewegliche Platte so verankert ist, daß sie keine Drehbewegung ausführen kann.

15. Vorrichtung nach einem Ansprüche 11 bis 14, dadurch gekennzeichnet, daß der Preßstempel gleichzeitig als Ultraschallgeber ausgebildet ist.

16. Verwendung der mit Hilfe des Verfahrens der Ansprüche 1 bis 10 erhaltenen Formteile zur Herstellung von elektrischen Bauelementen.

**Revendications**

1. Procédé pour la fabrication de pièces façonnées à partir de polymères organiques conducteurs de l'électricité et/ou de conducteurs organiques, caractérisé en ce que l'on met en forme des échantillons bien dégazés des polymères et/ou conducteurs organiques, pratiquement exempts de solvants, de monomères et d'oligomères, à l'abri de l'humidité et de l'oxygène, à une température qui est supérieure à 40°C et au-dessous de la température de décomposition des polymères conducteurs et/ou des conducteurs organiques, sous une pression d'au moins 500 bars, jusqu'à la formation d'une phase continue à surface très brillante, d'aspect métallique, qui, à l'examen visuel, se distingue par sa couleur du matériau de départ.

2. Procédé selon la revendication 1, caractérisé en ce que l'on applique une pression comprise entre 1 000 et 30 000 bars.

3. Procédé selon la revendication 1 ou 2, caractérisé en ce que l'on accroît la conductivité du polymère conducteur de l'électricité, par dopage (complexation) avant ou après le formage, en effectuant de préférence le dopage de façon homogène.

4. Procédé selon l'une des revendications 1 à 3, caractérisé en ce que l'on effectue le formage sous une atmosphère de gaz inerte ou sous un vide de moins de 100 mbars de pression résiduelle.

5. Procédé selon l'une des revendications 1 à 4, caractérisé en ce que, avant le formage, on ajoute des antioxydants et/ou inhibiteurs de réticulation usuels, en une quantité de 0,01 à 0,5% en poids, et éventuellement d'autres agents auxiliaires usuels de mise en œuvre.

6. Procédé selon l'une des revendications 1 à 5, caractérisé en ce que, avant le formage, on ajoute de 0,5 à 5% en poids d'un polymère s'opposant au passage de l'oxygène et de l'eau ou on revêt ultérieurement avec un polymère de ce type la pièce façonnée.

7. Procédé selon l'une des revendications 1 à 6, caractérisé en ce que l'on effectue le formage par pressage.

8. Procédé selon l'une des revendications 1 à 7, caractérisé en ce que, pour le pressage continu, on utilise une extrudeuse ou une extrudeuse hydraulique à piston, en amenant et maintenant sous vide l'article à presser.

9. Procédé selon l'une des revendications 1 à 8, caractérisé en ce que l'on produit par coextrusion ou coulée par injection de plusieurs composants, des plaques, feuilles ou pièces façonnées multicouches.

10. Procédé selon la revendication 9, caractérisé en ce que l'on fabrique des produits dont les couches externes sont constituées d'un polymère à faible coefficient de perméabilité à l'oxygène et/ou à la vapeur d'eau, qui peut présenter des propriétés isolantes ou antistatiques, tandis que la couche centrale est constituée d'un polymère conducteur à très conducteur de l'électricité.

11. Appareil pour la mise en œuvre du procédé des revendications 1 à 10, sous forme d'une presse chauffable, caractérisé par une capsule de presse (11, 12) pouvant être insérée entre un piston (2, 3) et une butée (4), capsule qui peut être mise sous vide ou remplie avec un gaz inerte, grâce à l'alésage cylindrique (7) de la presse et à un conduit (9).

12. Appareil selon la revendication 11, caractérisé en ce que la butée est constituée d'une plaque mobile (4), qui repose sur l'épaulement (6) d'un rétrécissement (7) de l'alésage cylindrique (5), ouvert vers le bas.

13. Appareil selon la revendication 11 ou 12, caractérisé en ce que le couvercle (12) de la capsule de presse est constitué d'un piston qui agit simultanément avec la partie inférieure (11) de la capsule de presse.

14. Appareil selon l'une des revendications 11 à 13, caractérisé en ce que le piston peut tourner et la plaque mobile formant la butée est fixée de telle manière qu'elle ne peut effectuer aucun mouvement tournant.

15. Appareil selon l'une des revendications 11 à 14, caractérisé en ce que le piston a en même temps la configuration d'un générateur d'ultrasons.

16. Utilisation des pièces façonnées obtenues à l'aide du procédé des revendication 1 à 10, pour la fabrication d'éléments de construction électrique.

## Claims

1. Process for the production of moulded parts from electrically conductive organic polymers and/or organic conductors, characterized in that well-degassed samples of the substantially solvent-free, monomer-free and oligomer-free conductive polymers and/or organic conductors are shaped under the exclusion of moisture and oxygen at a temperature above 40°C and below the decomposition temperature of the conductive polymers and/or organic conductors, under a pressure of at least 500 bar, until a continuous phase forms with a highly lustrous surface which appears metallic, which visually shows a colour which is different from the starting material.

2. Process according to claim 1, characterized in that a pressure between 1,000 and 30,000 bar is used.

3. Process according to claim 1 or 2, characterized in that the conductivity of the electrically conductive polymers is increased by doping (complexing) before or after shaping, preferably by homogeneous doping.

4. Process according to one of claims 1 to 3, characterized in that the shaping takes place under an inert gas atmosphere or under a vacuum of less than 100 mbar residual pressure.

5. Process according to one of claims 1 to 4, characterized in that before shaping, conventional antioxidants and/or cross-linking inhibitors are added in a quantity of 0.01 to 0.5% by weight and optionally further conventional processing aids.

6. Process according to one of claims 1 to 5, characterized in that before shaping, 0.5 to 5% by weight of a polymer blocking oxygen and water access is added or the moulded part is subsequently coated with such a polymer.

7. Process according to one of claims 1 to 6, characterized in that the shaping takes place by moulding.

8. Process according to one of claims 1 to 7, characterized in that for continuous moulding purposes, an extruder or a ram extruder is used, the moulded material being supplied and maintained under a vacuum.

9. Process according to one of claims 1 to 8, characterized in that multilayer mouldings, films or plates are produced by means of coextrusion or multi-component injection moulding.

10. Process according to claim 9, characterized in that products are produced the outer coatings of which comprise a polymer with a low oxygen and or water-vapour permeability coefficient, which can have insulating or antistatic properties, while the core layer comprises an electrically conductive to highly conductive polymer.

11. Apparatus for carrying out the process in claims 1 to 10 in the form of a heatable mould, characterized by a mould-capsule (11, 12) insertable between a ram (2, 3) and an abutment (4), which can be filled with inert gas or evacuated via the mould cylinder bore (7) and a line (9).

12. Apparatus according to claim 11, characterized in that the abutment comprises a movable plate (4), which rests on the shoulder (6) of a constriction (7) of the cylinder bore (5), which is open to the bottom.

13. Apparatus according to claim 11 or 12, characterized in that the cover (12) of the capsule is formed as a ram, which acts together with the lower part (11) of the capsule.

14. Apparatus according to one of claims 11 to 13, characterized in that the ram is formed so that it is rotatable and the movable plate forming the abutment is anchored such that it cannot perform a rotary movement.

15. Apparatus according to one of claims 11 to 14, characterized in that the ram is simultaneously formed as an ultrasound generator.

16. Use of the moulded parts obtained with the aid of the process in claims 1 to 10 for the production of electrical components.

# FIG.1

# FIG.2

① dotierte Folie

② erfindungsgemäßes Formteil, dotiert

FIG.3
FIG.4

% Remission

Wellenlänge (nm)

# FIG.5